Europäisches Patentamt

European Patent Office

Office européen des brevets

(19)

(11) Numéro de publication: **0 102 881**
**B1**

(12)

# FASCICULE DE BREVET EUROPEEN

(45) Date de publication du fascicule du brevet: **20.05.87**

(51) Int. Cl.⁴: **H 01 F 1/11**

(21) Numéro de dépôt: **83401580.2**

(22) Date de dépôt: **29.07.83**

(54) **Matériau ferromagnétique à base de carbonitrure de fer, préparation et application comme matériau d'enregistrement magnétique.**

(30) Priorité: **29.07.82 FR 8213286**

(43) Date de publication de la demande:
**14.03.84 Bulletin 84/11**

(45) Mention de la délivrance du brevet:
**20.05.87 Bulletin 87/21**

(84) Etats contractants désignés:
**DE FR GB IT NL**

(56) Documents cités:
**FR-A-1 081 149**
**FR-A-1 385 888**
**FR-A-2 047 012**

**JOURNAL OF THE PHYSICAL SOCIETY OF JAPAN, vol. 33, no. 1, juillet 1972, pages 62-69, M. MEKATA et al.: "Magnetic study on hexagonal nitrides of 3d transition metals"**

**Le dossier contient des informations techniques présentées postérieurement au dépôt de la demande et ne figurant pas dans le présent fascicule.**

(73) Titulaire: **Etablissement Public dit: CENTRE NATIONAL DE LA RECHERCHE SCIENTIFIQUE (CNRS)**
**15, Quai Anatole France**
**F-75007 Paris (FR)**

(72) Inventeur: **Demazeau, Gérard**
**42 rue Chouiney**
**F-33170 Gradignan (FR)**
Inventeur: **Andriamandroso, Jean Harry**
**Résidence Facstud no. 19 87 Av. Georges Clémenceau**
**F-33400 Talence (FR)**
Inventeur: **Pouchard, Michel**
**Bellegrave le Poujeau Pian Medoc**
**F-33290 Blanquefort (FR)**
Inventeur: **Tanguy, Bernard Résidence du Pontet**
**Les Bruyéres II Avenue du Pontet**
**F-33600 Pessac (FR)**
Inventeur: **Hagenmuller, Paul**
**351 Cours de la Libération**
**F-33405 Talence (FR)**

(74) Mandataire: **Phélip, Bruno et al**
**c/o Cabinet Harlé & Phélip 21, rue de la Rochefoucauld**
**F-75009 Paris (FR)**

(56) Documents cités

**CHEMICAL ABSTRACTS, vol. 83, no. 10, 8 septembre 1975, page 766, no. 90015z, Columbus, Ohio, USA**
**IEEE TRANSACTIONS ON MAGNETICS, vol. MAG-17, no. 6, novembre 1981, pages 3017-3019, IEEE, New York, USA, S. SUZUKI et al.: "Coercivity and unit particle size of metal pigment"**

## Description

La présente invention a pour objet de nouveaux matériaux ferromagnétiques, leur préparation et leur application comme matèriaux d'enregistrement magnétique. Elle concerne plus particulièrement l'élaboration et la définition sur le plan morphologique de matériaux à base de carbonitrures de fer, ayant des compositions et structures définies ainsi que des éléments d'enregistrement magnétique comprenant ces matériaux sur un support approprié.

La présente invention est également relative à l'élaboration et à la définition tant morphologique que des propriétés magnétiques desdits matériaux à base de carbonitrures de fer.

Les nitrures de fer ont fait l'objet d'un certain nombre d'études fondamentales en ce qui concerne leur structure cristalline et leur structure mgnétique. L'utilisation de ces matériaux pour l'enregistrement magnétique impose qu'ils satisfassent d'une part à des critères magnétiques (champ coercitif $H_c$ de 30 à 80 kA/m environ soit de 400 à 1000 Oe selon les applications envisagées—audio, vidéo ou digital . . ., aimantations à saturation et rémanente relativement importantes), d'autre part à des critères morphologiques qui dépendent également de la spécificité de l'application d'enregistrement magnétique envisagée: si des formes aciculaires sont requises notamment pour des applications de type "audio de haut de gamme" ou "vidéo", des morphologies plus isotropes sont nécessaires pour des utilisations sur disques, par exemple.

Peu de travaux ont été menés jusqu'à présent sur les relations pouvant exister entre les procédés d'élaboration utilisés et les caractéristiques morphologiques et magnétiques des nitrures de fer obtenus.

Le brevet US 2.994.600 décrit e traitement thermique de poudre de fer dans un gaz contenant de l'azote, tel que l'ammoniac; une partie du produit formé peut être constituée par du $Fe_4N$.

Le brevet FR 2.047.012 décrit une poudre de $Fe_4N$ particulière, utile comme matériau d'enregistrement magnétique; cette poudre, composée de particules aciculaires ayant une longueur de l'axe longitudinal se situant entre 0,5 et 2 µm et valant au moins 5 fois le plus grand diamètre, est préparée par chauffage, en lit fluidisé supporté un mélange d'hydrogène et d'ammoniac, d'une poudre d'oxyde de fer hydraté, α-FeOOH, ayant les mêmes caractéristiques d'acicularité que celles du produit final visé.

Le brevet US 3.700.499 décrit un matériau d'enregistrement magnétique comprenant, comme éléments magnétiquement actifs, des particules ayant un noyau ou coeur en fer, recouvert d'une couche de $Fe_4N$. Ce matériau est obtenu par nitruration totale ou partielle de $\gamma Fe_2O_3$ ou de fer élémentaire, à des températures croissantes (de 340 à 500°C), dans une atmosphère comprenant de l'hydrogène et de l'ammoniac.

La demande de brevet JP publiée sous le No. 51.51.796 décrit l'obtention de particules de nitrure de cobalto-fer par réduction de particules d'oxydes de Fe et Co, à température élevée et dans l'hydrogène, et ensuite traitement thermique des particules de métal mixte Fe-Co obtenues, dans du gas ammoniac.

La demande de brevet JP publiée sous le N° 52.84.179 décrit, entre autres, la préparation de particules de nitrure de fer par nitruration de fer métal vaporisé sous faible pression dans une enceinte contenant de l'ammoniac.

La demande de brevet EP publiée sous le N° 0.008.318 décrit la réalisation de films magnétiques amorphes dont le matériau magnétique comprend du nitrure de fer de formule $Fe_x N_{1-x}$, où x est compris entre 0,4 et 0,7. Ce matériau magnétique lui-même est disponible commercialement.

Plus récemment A. Tasaki, K. Tagawa, E. Kita, S. Harada et T. Kusunose ont développé la méthode de préparation de $Fe_4N$ (voir I.E.E.E. Transactions on Magnetics, vol. MAG 17(6), pp. 3026—3028, 1981) et proposé une nitruration en deux étapes successives, les particules de fer étant tout d'abord élaborées à partir des oxydes, des hydroxydes ou de solutions ferreuses selon des procédés classiques, connus de l'homme du métier.

Plus récemment K. Tagawa, E Kita et A. Tasaki (Japanese Journal of Applied Physics *21* (11), p. 1596 à p. 1598 1982) ont décrit la préparation de particules de $Fe_4N$ pour applications d'enregistrement magnétique. Le procédé d'élaboration décrit utilise les particules métalliques comme matériau de départ, ce qui implique au moins leur préparation préalable et leur manipulation.

Une publication plus ancienne de M. Mekata, H. Yoshimura et H. Takaki [(Journal of the Physical Society of Japan, *33* (1) p. 62 à p. 69, 1971)] décrivait la préparation et les propriétés magnétiques de nitrures de structure hexagonale des éléments 3d et en particulier du fer. Le procédé de synthèse consiste en deux étapes successives: la préparation de particules de métal puis leur nitruration. Si l'oxalate de fer a été mentionné comme précurseur de particules de fer, la nitruration conduit à la formation de nitrure hexagonal $FeN_x$. Les propriétés magnéqtiques observées sont selon les auteurs en accord avec celles de la littérature pour de tels nitrures.

Ainsi, l'enseignement de cette référence est limité à la préparation en deux étapes de nitrures de fer hexagonaux ne contenant pas d'atomes de carbone dans leur réseau cristallin. Le composé de fer utilisé comme précurseur, à savoir l'oxalate de fer, est d'abord réduit pour conduire à la formation de particules de fer. Celles-ci sont ensuite soumises à une nitruration, pour former le matériau final à base de nitrure de fer hexagonal.

S. Suzuki, H. Sakumoto, J. Minegishi et Y. Omote [IEE transactions on magnetics, Vol. Mag-17, N° 6, p. 3017—3019 (1981)] ont également décrit la préparation de pigments magnétiques à partir de différents sels de fer, y compris des oxalates de fer. Les particules métalliques sont obtenues en deux étapes successives, la première consistant en une calcination sous azote et la deuxième en une réduction sous hydrogène. Les pigments magnétiques décrits par les auteurs contiennent exclusivement du fer et éventuellement de l'azote dans le cas des nitrures.

Ainsi l'enseignement de cette référence est limité à la préparation de nitrures de fer par un procédé en deux étapes. On notera que, dans les conditions de température mises en oeuvre pour le traitement thermique de réduction des composés de fer, à savoir entre 200 et 600°C pour les oxalates, les atomes de carbone éventuellement libérés par la décomposition des oxalates ne peuvent s'insérer dans le réseau cristallin du fer, de sorte que la première étape du procédé antérieur conduit nécessairement à des particules de fer ne contenant pas de carbone. Le produit final obtenu après nitruration est bien un nitrure de fer, comme mentionné dans l'article en cause.

Le brevet FR 1.385.885 décrit la préparation d'une poudre par décomposition thermique du fer carbonyle $Fe(CO)_5$, vers 450°C, en présence d'ammoniac. La poudre ainsi obtenu est désignée sous le nom de "poudre de fer-carbonyle nitrurée". Aucune caractéristique cristallographique n'est indiquée. Le produit obtenu est une poudre de fer avec un peu de carbone et d'azote dissous dans l'azote.

Le brevet FR 1.081.149 décrit un procédé de préparation de nitrure de fer en deux étapes, la première conduisant, par suite de la décomposition thermique de $Fe(CO)_5$ à du fer contenant de l'azote et du carbone, et la seconde étape consistant en une nitruration du produit de la première étape. Ce procédé ne permet pas de contrôler la présence du carbone dans le produit final et n'aboutit pas à un carbonitrure de fer.

Les nitrures de fer étant relativement sensibles au vieillissement, il était important de définir et d'élaborer de nouveaux matériaux plus stables.

En outre les particules métalliques sous forme très divisée sont difficilement manipulables dans des conditions acceptables sur le plan industriel. Il était donc désirable que l'élaboration de ces nouveaux matériaux se fasse en une seule étape à partir de précurseurs faciles à préparer et à utiliser sans précautions particulières.

La présente invention répond à ces besoins. L'invention a également pour objet un matériau présentant simultanément une bonne passivation et une bonne aimantation, ainsi qu'il sera décrit ci-aprés.

L'invention concerne un procédé pour la préparation d'un matériau ferromagnétique à base de carbonitrure de fer divisé, caractérisé en ce qu'il comprend un traitement en une seule étape de réduction et de nitruration d'au moins un précurseur consistant en un composé de fer se décomposant dans les conditions dudit traitement en formant une atmosphère carburante, conduisant ainsi à un matériau à base de nitrure de fer contenant des atomes de carbone dans son réseau cristallin.

Les travaux dont la présente invention est l'une des principales conclusions ont porté sur la recherche d'éléments susceptibles d'accroître non seulement la stabilité, mais d'orienter la cristallogénèse des particules et leurs propriétés magnétiques (champ coercitif par example) en vue d'applications spécifiques dans l'enregistrement magnétique.

En effet, même s'il était possible, comme on a cherché à le faire dans le passé, de relier la morphologie du nitrure de fer obtenu à celle du produit de départ servant à sa synthèse, il était en outre nécessaire que la décomposition de ce produit de départ conduise à augmenter le pouvoir réducteur du milieu et ainsi favorise la réactivité de ce milieu réactionnel vis-à-vis de la nitruration. Comptetenu de l'application considérée, une stabilité accrue des particules magnétiques vis-à-vis de l'atmosphère ambiante devait aussi être recherchée.

Une telle stabilité est apportée par du carbone, la décomposition du précurseur conduisant dans les conditions de mise en oeuvre du procédé, de température notamment, à un milieu gazeux carburant.

Il est important de noter que les conditions de mise en oeuvre du traitement thermique avec réduction et nitruration simultanées du composé précurseur de fer, concourent à la formation d'un carbonitrure de fer.

Afin d'obtenir des carbonitrures dans le domaine de basses et moyennes températures utilisées pour la réaction, il est nécessaire en effet que la formation de carbone par décomposition du précurseur soit accompagnée d'une atmosphère nitrurante ($H_2$ et $NH_3$ par exemple). Une telle condition est remplie par le procédé en une seule étape de l'invention permettant la formation directe d'une atmosphère carburante et nitrurante.

Selon l'invention, les précurseurs sont sélectionnés parmi les composés susceptibles, lors de leur décomposition thermique, de conduire à la formation d'oxydes de carbone. Les oxalates, les acétates, les citrates, les benzoates, les acétylacétonates de fer ont été trouvés comme étant susceptibles de répondre à ce critère. Cependant les précurseurs les plus appropriés à une application industrielle sont choisis parmi ceux dont la décomposition ne conduit qu'à une phase solide et une ou plusieurs phases gazeuses à l'exclusion de tout résidu important de carbonisation de produits organiques. Selon l'invention, les oxalates, les acétates et les citrates répondent à ce dernier critère.

Le passage du précurseur aux "carbonitrures" se fait avec pseudomorphisme. Il en découle que la définition morphologique du précurseur est importante car elle conditionne l'application pour enregistrement magnétique du matériau magnétique obtenu après carbonitruration.

Ce pseudomorphisme implique la conservation de la forme générale géométrique de la particule du matériau de départ, mais, dans le produit final, la particule peut être subdivisée en pseudoparticules de taille inférieure.

## 0 102 881

Ainsi, pour obtenir des formes et des tailles variées de particules magnétiques on peut—soit intervenir sur la nature du précurseur (première variante),—soit intervenir sur le mode de préparation de ce précurseur (deuxième variante),—soit utiliser des agents orientateurs de croissance de ce précurseur (troisième variante).

Afin d'illustrer la première variante, par exemple l'oxalate de fer du fait d'une croissance priviligiée sous forme de cristallites aciculaires est tout à fait propice à la préparation de particules magnétiques aciculaires. En revanche les citrates utilisés comme précurseurs sont plus aptes à préparer des particules de très petite taille et de forme plus isotrope jusqu'à des matériaux pratiquement amorphes aux rayons X. Pour illustrer la seconde variante, par exemple, l'oxalate peut être obtenu sous forme préférentiellement aciculaire en choisissant $FeCl_2$ en concentration moyenne ($2 \cdot 10^{-2}M$) comme produit de départ et des valeurs moyennes de pH (pH$\approx$2) des solutions d'acide oxalique lors de la précipitation de l'oxalate de fer. A pH constant l'accroissement de la concentration de la solution de $FeCl_2$ de départ diminue la taille des particules d'oxalate de fer. A concentration constante en $FeCl_2$ mais à pH croissant l'acicularité des cristallites d'oxalate de fer augmente et leur taille moyenne diminue. La combinaison de ces différents facteurs expérimentaux gouvernant la préparation de l'oxalate, utilisé comme exemple de précurseur, peut donc permettre à l'homme du métier de définir la taille et la morphologie désirées pour le précurseur et donc par pseudomorphisme celles des microcristallités du matériau magnétique. La troisième variante consiste à diminuer la taille et/ou orienter la forme des cristallites de précurseur en introduisant des "germes initiateurs de croissance" dudit précurseur au sein de la solution de sel de fer. Par exemple si l'on veut induire la forme aciculaire et si l'on désire de petites particules d'oxalate de fer ces germes "initiateurs de croissance du précurseur" peuvent être avantageusement choisis parmi les oxalates de terres rares. Ainsi l'addition d'un sel de lanthane (nitrate de lanthane en faible quantité$\leqslant$5% atomique par rapport aux cations métalliques) à la solution de sel ferreux permet d'obtenir un précipité d'oxalate de lanthane avant celui d'oxalate de fer, les particules du premier servant de germes au second. Ces germes initiateurs de croissance peuvent être de nature variée et le choix de leur morphologie peut être pour l'homme du métier un moyen approprié de contrôler la taille et/ou la forme des cristallites du précurseur.

La transformation des cristallites de précurseur en "carbonitrure" peut s'effectuer à l'aide de différents types d'appareillages selon le développement industriel désiré. Si une nacelle au sein d'un four peut être l'un de ceux-ci, un dispositif de lit fluidisé apparaît comme particulièrement approprié à une réalisation industrielle. Dans ce derner cas, du fait d'un meilleur contact entre le mélange gazeux et les cristallites, les temps de réaction sont plus courts.

En pratique les conditions expérimentales dépendent du dispositif utilisé. En règle générale, il convient d'effectuer la réaction à une température de 350° à 450°C environ dans le premier dispositif et entre 300° et 450°C dans le second (lit fluidisé).

La réaction est conduite normalement, mais non exclusivement, à pression atmosphérique.

Le mélange gazeux mis en oeuvre est un mélange $H_2$—$NH_3$ correspondant avantageusement à un rapport en volume/volume des composants $H_2/NH_3$ de 2 à 5 environ dans le cas d'une nacelle dans un four et de 0,3 à 1,2 environ dans le cas d'un dispositif de lit fluidisé.

Dans la pratique, on conduit la réaction pendant une durée suffisante pour l'obtention majoritaire du produit magnétique désiré. Selon les technologies mises en oeuvre, cette durée peut se situer de 1 à 7 heures sans que ces limites soient critiques.

En outre on a maintenant trouvé selon la présente invention qu'il était possible d'orienter sélectivement la formation de tel ou tel matériau magnétique. Ainsi, par exemple la formation d'un matériau dérivé de $Fe_4N$ s'accompagne souvent d'impuretés dérivées de $Fe_3N$.

L'incorporation de cuivre sous forme d'un de ses sels dans le solution de $FeCl_2$ lors de la précipitation du précurseur, tel que l'oxalate, conduit préférentiellement lors du procédé, à la formation d'un matériau magnétique de structure dérivée de $Fe_4N$. En revanche l'utilisation de cobalt au delà d'une proportion de l'ordre de 10% du rapport Co/Fe rend très difficle la formation d'un matériau de structure $Fe_4N$ et favorise préférentiellement celui dérivé de $Fe_3N$. Le cuivre métallique cristallisant dans le système cubique faces centrées (c.f.c.), il semble qu'il ait un effet initiateur structural, $Fe_4N$ étant constitué d'un réseau c.f.c. de fer. Le cobalt de structure hexagonale induirait alors un effet initiateur structural vers $Fe_3N$ constitué d'un emplilement hexagonal de fer.

Ainsi l'homme du métier est à même de choisir judicieusement un "dopant initiateur structural" afin d'orienter lors de la transformation du précurseur la synthèse s'un matériau magnétique de structure désirée.

Du fait que les nitrures de fer peuvent être pyrophores, il est recommandé de parachever la préparation des produits obtenus par le remplacement du mélange gazeux $H_2$—$NH_3$ par un gaz neutre tel que l'azote, pendant le refroidissement du produit de la réaction et avant mise en contact de celui-ci avec l'atmosphère ambiante et/ou l'immersion, dans un solvant tel que le toluène, de la poudre noire finement divisée alors obtenue et séchage.

L'invention a également pour object le produit divisé que permet d'obtenir ce procédé et qui se définit comme étant un carbonitrure de fer. La taille des particules peut varier dans d'assez larges limites, selon la granulométrie du matériau précurseur, laquelle varie généralement entre 0,5 et 15 µm.

On a trouvé selon l'invention que, lorsque le rapport $H_2/NH_3$ dans un four conventionnel atteint ou dépasse environ 4:1, on obtient directement un carbonitrure de fer divisé peu riche en azote; ce matériau

5

s'apparente au nitroferrite alpha. Les atomes de carbone proviennent de l'oxyde de carbone issu de la décomposition de l'oxalate et remplacent préférentiellement une partie des atomes d'azote au sein du réseau.

Au sein du carbonitrure de structure dérivée de $Fe_4N$ la quantité de carbone insérée est fonction des conditions expérimentales qui notamment régissent l'équilibre $2CO \rightleftharpoons CO_2 + C$. Si l'on considère ce matériau la quantité de carbone peut varier de 1 à 35% atomique du métalloïde inséré dans les conditions usuelles du procédé.

Les valeurs précises de la quantité de carbone présent dans le matériau final à base de carbonitrure de fer dépendent des paramètres de la réaction et notamment de la température. Plus la température est élevée, en effet, moins le mélange gazeux est carburant, du fait que la stabilité de CO augmente, et par conséquent, plus la quantité de carbone présente dans le matériau est faible. Au contraire, les basses températures de la gamme précitée favorisent la formation d'un mélange plus fortement carburant, en raison de la décomposition de CO, de sorte que le nombre d'atomes de carbone introduits dans le réseau cristallin du nitrure de fer est plus élevé.

Une étude comparée de la stabilité de $Fe_4N$ préparé conventionnellement et du "carbonitrure" de même structure préparé selon le procédé décrit dan la présente a montré une meilleure stabilité des propriétés magnétiques de ce dernier matériau dans des conditions de vieillissement sévères (100% de degré hygrométrique, température voisine de 70°C, pendant une durée de 10 semaines). Ainsi le rapport $\sigma$final/$\sigma$initial ($\sigma = \sigma_s / \sigma_r$) décroît moins vite dans le cas des carbonitrures de l'invention que dans le cas de $Fe_4N$ conventionnel. En outre la stabilité est meilleur dans le cas de carbonitrures obtenus à partir du précurseur oxalate que du précurseur acétate.

Les propriétés magnétiques des matériaux ferromagnétiques-notamment le champ coercitif $H_c$-varient selon la taille moyenne des microcristallites. Afin d'améliorer $H_c$ on peut avantageusement diminuer la taille des microcristallites sand dépasser la taille critique menant aux propriétés de superparamagnétisme.

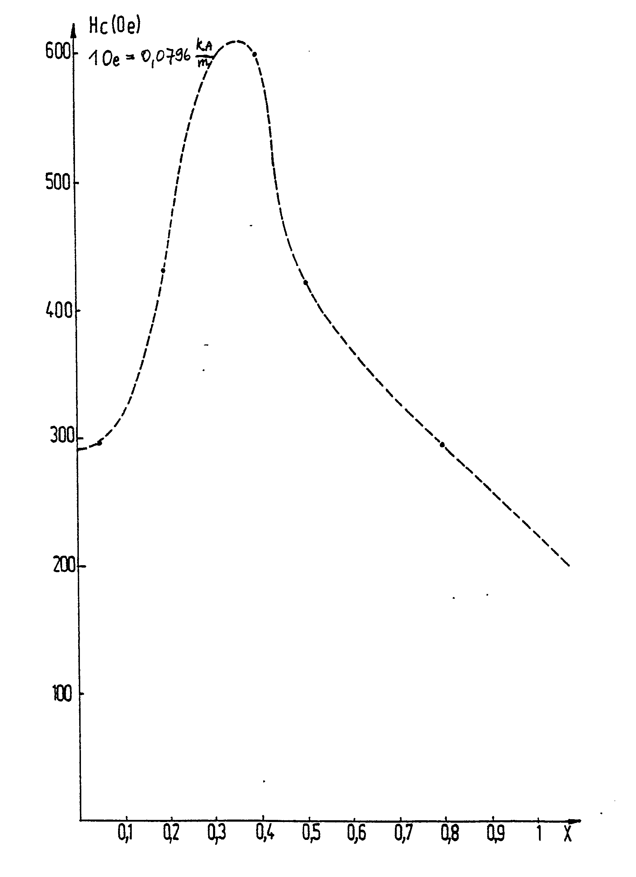

Certains éléments peuvent avantageusement limiter la croissance des microcristallites (pseudoparticules) des matériaux dérivés des nitrures de fer. Dans le cadre de la présente invention, on a trouvé que l'étain incorporé lors de l'élaboration du précurseur permettait lors de la transformation en matériau magnétique de contrôler efficacement la taille des microcristallites. L'évolution générale de $H_c$ en fonction de la quantité d'étain introduite initialement est schématisée sur la figure 1. Une étude physique précise, a montré que l'étain était capable de se substituer au fer dans le réseau du matériau magnétique et donc d'influencer notablement la cristallogénèse de ses microcristallites. Dans les conditions expérimentales usuelles des quantités de Sn introduites variant de 5 à 15% atomique par rapport au métal du réseau de $Fe_4N$ sont particulièrement appropriées, des taux voisins de 10%, sont susceptibles de conduire à des valeurs élevées du champ coercitif (50 kA/m).

Ainsi l'homme du métier est susceptible de choisir parmi les agents limitateurs de croissance des microcristallites de propriétés voisines de celles de l'étain et de définir les taux les plus appropriés. L'incorporation de tels agents se réalise selon les techniques connues de coprécipitation des précurseurs métalliques, par exemple des oxalates métalliques mixtes ou non, concernés.

En outre les propriétés magnétiques du matériau ferromagnétique sont dépendantes non seulement de l'anisotropie morphologique des microcristallites le constituant mais également de l'anisotropie magnétocristalline au sein du réseau ou à la surface de ces microcristallites.

On a trouvé dans le cadre de la présente invention que des éléments présentant une anisotropie magnétocristalline importante, pouvaient, insérés au sein du réseau et/ou adsorbés à la surface des microcristallites, conduire à des propriétés magnétiques performantes. L'iridium Ir° ou le rhodium Rh°, au degré d'oxydation O, pris comme exemples non limitatifs, incorporés lors de l'élaboration du précurseur et/ou diffusés à la surface du précurseur, étaient susceptibles de conduire à des champs coercitifs élevés. Les taux de substitution peuvent être choisis à convenance par l'homme du métier mais des taux de 1 à 20% en atomes d'éléments par rapport au nombre total d'atomes métalliques sont le plus généralement appropriés.

Les matériaux ferromagnétiques selon l'invention ont des caractéristiques de magnétisation et de champ coercitif qui les rendent tout à fait appropriés pour les utilisations à titre d'élément actif de matériaux d'enregistrement magnétique. En particulier, ils présentent un champ coercitif compris, selon la variante considérée, entre environ 30 et environ 80 kA/m.

De plus, des mesures de champ coercitif effectuées sur de tels produits obtenus conformément à l'invention, placés à l'air ambiant pendant environ 6 mois, ont encore donné les mêmes valeurs de champ coercitif après ce stockage à l'air.

Les matériaux obtenus selon l'invention sont utiles pour la réalisation d'élements d'enregistrement magnétique destinés à des dispositifs d'enregistrement magnétique pour l'enregistrement "audio", l'enregistrement "vidéo", l'enregistrement des données pour ordinateurs, et autres.

Les éléments d'enregistrement magnétique concernés sont essentiellement les bandes, boucles, disques magnétiques et autres. Ils comprennent une couche appropriée de particules du ou des matériaux magnétiques dans un liant organique, fixée sur un support en matière non magnétique composé, par exemple, d'un polymère synthétique, d'une résine synthétique, de métal ou d'alliages métalliques, de verre, de quartz, de céramique, de papier ou autres.

# 0 102 881

En résumé, les principales caractéristiques de la présente invention prises isolément ou en combinaison concernent:

(A) pour ce qui concerne les produits, de nouveaux matériaux ferromagnétiques:

— consistant en un carbonitrure de fer se présentant sous forme divisée,

— consistant en un carbonitrure de fer dont la structure cristalline correspond à celle du nitrure de fer $Fe_4N$ dans laquelle 1 à 35% environ des atomes d'azote sont remplacés par des atomes de carbone,

— consistant en un carbonitrure de fer dont la structure cristalline correspond à celle du nitrure de fer $Fe_3N$ dans laquelle 1 à 35% environ des atomes d'azote sont remplacés par des atomes de carbone,

— consistant en un carbonitrure de fer divisé peu riche en azote, sous forme d'une solution solide de nitroferrite alpha dans laquelle 1 à 50% environ des atomes d'azote de la solution solide sont remplacés par des atomes de carbone,

— dans laquelle les atomes restants de fer du réseau cristallin sont substitués par 5 à 15% d'atomes d'étain, en particulier environ 10%,

— présentant jusqu'à 20% en atomes, par rapport au nombre total d'atomes métalliques du matériau, d'éléments ayant une anisotropie magnétocristalline importante, tels que l'iridium ou le rhodium au degré d'oxydation O,

— contenant en outre des atomes de terres rares, tels que le lanthane, à raison d'au maximum 5% par rapport au total des atomes métalliques,

— contenant en outre un élément initiateur structural cristallisant dans un système cubique à faces centrées, tel que le cuivre,

— contenant en outre un élément initiateur structural cristallisant dans un système hexagonal, tel que le cobalt.

(B) pour ce qui concerne les procédés définis précédemment:

— on choisit les précurseurs parmi les composés de fer formant des oxydes de carbone lors de leur décomposition thermique, en particulier les oxalates, acétates, citrates, benzoates et acétylacétonates de fer, les oxalates, acétates et citrates étant préférés,

— on fait varier la forme et/ou la taille des particules du matériau obtenu par le choix de la nature du précurseur, grâce au fait que le passage du précurseur au carbonitrure de fer se fait avec pseudomorphisme,

— pour former un précurseur sous forme aciculaire, on fait réagir une solution de sel de fer (II), tel que $FeCl_2$, sur une solution d'acide oxalique, en faisant varier la concentration de la solution de $FeCl_2$ et le pH de la solution d'acide oxalique,

— on contrôle la forme et la taille des particules du matériau obtenu en introduisant des germes initiateurs de croissance du précurseur au sein de la solution de fer,

— on oriente la forme aciculaire et l'obtention de petites particules du matériau en utilisant conjointement de l'oxalate de fer et au moins un oxalate de terre rare, tel que l'oxalate de lanthane, utilisé par exemple en une quantité inférieure à 50% en atomes de lanthane par rapport aux atomes de fer,

— on opère le traitement thermique entre 300°C et 450°C environ,

— pour le traitement de réduction et de nitruration simultanées, on utilise un mélange $H_2/NH_3$,

— on favorise l'obtention d'un matériau de structure désirée en faisant varier les proportions du mélange $H_2/NH_3$, une augmentation de la proportion de $H_2$, par exemple des rapports $H_2/NH_3$ de 4/1 dans un four conventionnel et au-delà favorisant la formation de carbo-nitroferrite tandis que la diminution de la proportion de $H_2$ favorise la formation de carbonitrure de fer,

— on oriente sélectivement la formation d'un matériau magnétique à base de carbonitrure à structure dérivée de $Fe_4N$ en introduisant un dopant initiateur structural, tel qu'un sel de cuivre, dans la solution donnant naissance au précurseur de fer,

— on oriente sélectivement la formation d'un matériau magnétique à base de carbonitrure à structure dérivée, de $Fe_3N$ en introduisant un dopant initiateur structural tel qu'un sel de cobalt, dans la solution donnant naissance au précurseur de fer,

— on contrôle la croissance des microcristallites en introduisant un agent limitateur de croissance, tel que l'étain, capable de se substituer au fer dans le réseau cristallin du matériau final, à raison de 5 à 15%, en particulier de 10% environ, en atomes par rapport aux atomes de fer,

— on introduit dans le précurseur des éléments présentant une anositropie magnétocristalline importante, tels que l'iridium ou le rhodium, en particulier jusqu'à 20% en atomes desdits éléments par rapport au nombre total d'atomes métalliques.

L'invention sera encore illustrée sans être aucunement limitée par les exemples ci-après.

Exemple I

Dans l'exemple 1, on montre l'influence des conditions réactionnelles sur l'évolution de la taille des particules en faisant varier la concentration en fer (2+), tout en gardant à une valeur constante le pH de la solution d'acide oxalique.

7

Trois solutions de 250 ml, A, B, C de concentrations respectives $5 \cdot 10^{-3}$, $2 \cdot 10^{-2}$ et $10^{-1}$ en fer (2+) sont préparées à partir de $FeCl_2$, $4H_2O$. A chacune de ces solutions, on ajoute goutte à goutte 50 ml d'acide oxalique 0,1 molaire tout en maintenant une agitation énergique. Les précipités obtenus sont filtrés, lavés, séchés et préparés pour la microscopie électronique à balayage. La taille moyenne des cristallites constituant les différents oxalates diminue de A à C, de 10 $\mu$ à 4—5 $\mu$.

Exemple II

Dans l'exemple 2, on prépare trois solutions ayant la même concentration en $FeCl_2$ mais on fait varier le pH des solutions réactionnelles d'acide oxalique, afin de montrer que la taille des particules varie avec le pH.

Trois solution de 250 ml de même concentration en $Fe^{2+}$ sont préparées à partir de $FeCl_2$, $4H_2O$. On y ajoute goutte-à-goutte des solutions d'acide oxalique de pH différents 1,5, 1,8 et 2 respectivement tout en agitant. La morphologie des oxalates obtenus est analysée au microscope électronique à balayage. Le rapport moyen L/1 des particules passe de 2 à 4 et la taille moyenne des cristallites diminue de 10 $\mu$ à 5 $\mu$ quand le pH croît, de 1,5 à 2.

Exemple III

L'exemple 3 illustre l'utilisation d'acétate de fer comme composé précurseur.

Environ 1 g d'acétate de fer (III) basique est répandu uniformément dans une nacelle en alumine placée dans un tube en quartz. On fait passer un mélange gazeux $H_2/NH_3$ dans le rapport 3,2:1 et on porte la température du tube à 400°C. Après 6 heures de réaction on arrête le flux de mélange gazeux, et on le remplace par un courant d'azote pendant 5 minutes tout en refroidissant le tube de quartz. Le produit ainsi obtenu est plongé directement dans du toluène, lavé puis séché. Le spectre de rayons X du produit est isotype de celui de la phase $Fe_4N$ et le champ coercitif mesuré au magnetomètre est voisin de 22,4 kA/m. La taille des microscritallites observée au microscope électronique à balayage est comprise entre 0,04 $\mu$ et 0,1 $\mu$.

Exemple IV

On place une nacelle en alumine contenant du citrate de fer (III) dans un tube de quartz. On chauffe le tube à 400°C, et simultanément on y envoie un mélange gazeux $H_2/NH_3$ dans le rapport 3,2/1. Le courant de mélange gazeux est arrêté après 6 heures de réaction, et remplacé par un flux d'azote pendant 5 minutes tout en refroidissant le tube. On plonge directement le produit obtenu dans du toluène puis il est lavé et séché. Le spetre de rayons X dénote que la phase magnétique ainsi préparée est amorphe.

Le champ coercitif $H_c$ de 18 kA/m implique un nombre important de microcristallites super-paramagnétiques.

Afin d'améliorer les caractéristiques magnétiques, on fait croître la taille des particules du matériau par tout procédé connu, par exemple en lui faisant subir un recuit.

Exemple V

L'exemple 5 illustre l'utilisation d'un agent initiateur de croissance (lanthane), 1g d'oxalate de fer contenant 5% de La est maintenu en suspension dans un tube de quartz à l'aide d'un flux ascendant (15 l/h) de mélange gazeux $H_2/NH_3$ (0.6) et d'un vibreur assurant un mouvement longitudinal. Un ruban chauffant entoure le tube de quartz et maintient constante la température du "lit fluidisé" à 400°C. Après 3,5 heures de réaction, on remplace le flux gazeux par un courant d'azote et on ramène le système à la température ambiante. Le produit obtenu est plongé directement dans du toluène, lavé puis séché. Le spectre de rayons X de la phase magnétique ainsi préparée est semblable à celui du nitrure $Fe_4N$. Le champ coercitif mesuré à l'aide d'un magnétomètre est voisin de 42,2 kA/m.

Exemple VI

L'exemple 6 illustre l'utilisation d'un agent initiateur structural (cuivre).

L'addition goutte à goutte d'une solution d'acide oxalique de pH=2 dans une solution (250 ml) 0,02 molaire d'un mélange de $FeCl_2$, $4H_2O$ et de $Cu(NO_3)_2$, $3H_2O$ (rapport atomique Cu/Fe=0,05) a conduit à la formation d'un coprécipité d'oxalate de fer et de cuivre. 1g environ de ce produit est répandu uniformément dans une nacelle en alumine placée dans un tube de quartz. Le mode opératoire décrit dans l'exemple 3 a été suivi pour la carbonitruration de cet échantillon. La caractérisation cristallographique du produit obtenu révèle une seule phase isotype de $Fe_4N$.

Des différents coprécipités d'oxalate de fer et de cuivre de rapport atomique Cu/Fe variant de 0,025 à 0,25 ont été préparés et soumis au même processus de carbonitruration. Dans tous les cas, la phase de type $Fe_4N(\gamma')$ est facilement obtenu. Par contre la présence d'une phase isotype des nitrures hexagonaux, souvent rencontrée lors des nitrurations ou carbonitrurations n'a pas été décelée.

Exemple VII

Divers coprécipités d'oxalate de fer et de cobalt de rapport Co/Fe compris entre 0,025 et 0,25 ont été préparés et soumis à un traitement de carbonitruration. La carbonitruration du coprécipité de rapport Co/Fe=0,025 a donné une seule phase isotype de $Fe_4N$ avec un champ coercitif de 32 kA/m. Pour un rapport

## 0 102 881

Co/Fe>0,1 la présence d'une phase isotype de $Fe_4N$ est presque inexistante, seule la phase hexagonale prédomine, et peut être ainsi facilement obtenu.

Exemple VIII

Environ 1 g d'oxalate de fer préparé à partir d'une addition goutte à goutte de l'acide oxalique (pH≃2) dans une solution de $FeCl_2$ 0,02 molaire, contenu dans une nacelle en alumine est placée dans un tube de quartz pour être carbonitruré selon le mode opératoire décrit dans l'exemple III. Le produit obtenu ne présente qu'une seule phase isotype de $Fe_4N$ après caractérisation aux rayons X.

Un dosage chimique classique de carbone a été effectué sur le produit. On a trouvé 6% atomique de carbone par rapport aux différents atomes du réseau.

Des dosages en microscopie Auger sur quelques particules ont donné:

— 7% atomique de carbone à la surface des particules
— 4% de carbone après décapage de la surface d'environ |800|Å.

Exemple IX

On dissout simultanément dans 250 cm$^3$ d'eau 1,9682 g de $FeCl_2$, $4H_2O$ et 0,0433 g de $La(NO_3)_3$, $6H_2O$ et on verse goutte à goutte la solution formée dans 200 cm$^3$ d'une solution d'acide oxalique de pH de départ égal à 2. Après 30 minutes environ d'agitation, le précipité d'oxalate finement divisé est filtré, lavé puis séché. 1 g de ce produit est mis dans une nacelle en alumine placée dans un tube de quartz pour être carbonitruré suivant le mode opératoire décrit dans l'exemple 3, mais avec un rapport de mélange gazeux de l'ordre de 4:1, et avec un temps de réaction de 6 heures, la température de réaction étant toujours de 400°C. On obtient ainsi un matériau dérivé du nitroferrite qui présente un champ coercitif voisin de 67,6 kA/m (850 oe).

Exemple X

On fait subir un test de vieillissement à 3 types différents de matériaux magnétiques de structure de type $Fe_4N$.

Trois précurseurs sont utilisés pour préparer ces trois matériaux:

A: à partir de l'oxyde
B: à partir de l'acétate
C: à partir de l'oxalate.

Le produit A correspond à du $Fe_4N$ "conventionnel", en revanche les matériaux B et C sont des carbonitrures isostructuraux.

Pour ce faire, on place les produits dans une atmosphère humide (100% d° hygro) à 60—70°C. Des mesures magnétiques ont été faites toutes les semaines pour suivre l'évolution de $\sigma_s$ et $\sigma_r$ pour chaque produit. Après dix semaines de traitement, les résultats des mesures et d'analyse radiocristallographique sont donnés au tableau ci-après. Les champs coercitifs des produits n'ont presque pas variés.

| | A | B | C |
|---|---|---|---|
| $\sigma_r(f)/\sigma_s(i)$ | 0,83 | 0,85 | 0,90 |
| $\sigma_r(f)/\sigma_s(i)$ | 0,896 | 0,887 | 0,91 |
| analyse RX finale | $Fe_4N$+oxydes de fer+$Fe_\alpha(N)$ | $Fe_4N$+$Fe_\alpha(N)$ | $Fe_4N$+$Fe_\alpha N$ |

(f)=final
(i)=initial

Exemple XI
Cet exemple illustre l'utilisation de l'étain

On a dissous dans 250 cm$^3$ d'eau 1,7893 g de $FeCl_2$, $4H_2O$ et 0,225 g de $SnCl_2$, $2H_2O$. On a versé cette solution dans 150 cm$^3$ d'acide oxalique 0,1 M (pH≃2) et on a ensuite agité vigoureusement. Après filtration, et lavage et séchage du précipité recueilli, on a obtenu un oxalate finement divisé constitué de très petites particules. On a soumis 1 g de cet oxalate à un traitement de carbonitruration selon le mode opératoire décrit à l'exemple III.

On a ainsi obtenu une solution solide $Fe_{3,6}Sn_{0,4}N_{1-\varepsilon}C_\varepsilon$, qu'on a plongée directement dans du toluène et ensuite lavée puis séchée. Ce produit s'est avéré présenter un champ coercitif de l'ordre de 47,7 kA/m.

La valeur de $\varepsilon$ est voisine de 0,3, ce qui représente environ 6% d'atomes de carbone par rapport aux atomes de fer.

9

**Exemple XII**

Des coprécipités d'oxalate de fer et d'étain avec une pourcentage atomique par rapport aux atomes métalliques d'étain variant de 0 à 25%, ont été préparés, puis soumis à un traitement de carbonitruration, les champs coercitifs des différents échantillons isotypes de Fe₄N sont portés sur la figure 1.

La figure 1 est un diagramme montrant en abcisses la concentration $x$ en étain dans le composé de formule:

$$Fe_3Fe_{1-x}Sn_xN_{1-\varepsilon}C_\varepsilon$$

et en ordonnées le champ H en oersteds (1 oersted=1 kA/m divisé par 4π).

**Exemple XIII**

Un coprécipité d'oxalate de fer et de rhodium avec un rapport Rh/Fe de l'ordre de 0,025 a été préparé à partir d'une solution de FeCl₂ et de nitrate de rhodium ajoutée goutte à goutte à une solution d'acide oxalique de pH voisin de 2-1 g de ce produit est carbonitruré dans un dispositif de lit fluidisé suivant le mode opératoire décrit dans l'exemple 5. Le spectre de rayons X du produit obtenu ne dénote qu'une seule phase de structure de type Fe₄N. Il a un champ coercitif de 41 kA/m.

**Revendications**

1. Matériau ferromagnétique consistant en un carbonitrure de fer se présentant sous forme divisée, caractérisé en ce que sou champ coercitif est entre 30 à 80 kA/m.

2. Matériau ferromagnétique selon la revendication 1, dont la structure cristalline correspond à celle du nitrure de fer Fe₄N dans laquelle 1 à 35% environ des atomes d'azote sont remplacés par des atomes de carbone.

3. Matériau ferromagnétique selon la revendication 1 dont la structure cristalline correspond à celle du nitrure de fer Fe₃N dans laquelle 1 à 35% environ des atomes d'azote sont remplacés par des atomes de carbone.

4. Matériau ferromagnétique selon la revendication 1 dont la structure correspond à celle d'une solution solide de nitroferrite alpha dans laquelle 1 à 50% environ des atomes d'azote de la solution solide sont remplacés par des atomes de carbone.

5. Matériau selon l'une quelconque des revendications 1 à 4, dans lequel les atomes restants de fer du réseau cristallin sont substitués par 5 à 15% d'atomes d'étain, en particulier environ 10%.

6. Matériau selon l'une quelconque des revendications 1 à 5 présentant jusqu'à 20% en atomes, par rapport au nombre total d'atomes métalliques du matériau, d'éléments ayant une anisotropie magnétocristalline importante, tels que l'iridium ou le rhodium au degré d'oxydation O.

7. Matériau selon l'une quelconque des revendications 1 à 6 contenant en outre des atomes de terres rares, tels que le lanthane à raison d'au maximum 5% par rapport au total des atomes métalliques.

8. Matériau selon la revendication 2, contenant en outre un élément initiateur structural cristallisant dans un système cubique à faces centrées, tel que le cuivre.

9. Matériau selon la revendication 3, caractérisé en ce qu'il contient en outre un élément initiateur structural cristallisant dans un système hexagonal, tel que le cobalt.

10. Procédé pour la préparation d'un matériau ferromagnétique consistant en un carbonitrure de fer, caractérisé en ce qu'il comprend un traitement en une seule étape de réduction et de nitruration d'au moins un précurseur consistant en un composé de fer, se décomposant dans les conditions dudit traitement en formant une atmosphère carburante, conduisant ainsi à un nitrure de fer contenant des atomes de carbone dans son réseau cristallin.

11. Procédé selon la revendication 10, caractérisé en ce qu'on choisit les précurseurs parmi les composés de fer formant des oxydes de carbone lors de leur décomposition thermique, en particulier les oxalates, acétates, citrates, benzoates et acétylacétonates de fer, les oxalates, acétates et citrates étant préférés.

12. Procédé selon l'une des revendications 10 ou 11, caractérisé en ce qu'on fait varier la forme et/ou la taille des particules du matériau obtenu par le choix de la nature du précurseur, grâce au fait que le passage du précurseur au carbonitrure de fer se fait avec pseudomorphisme.

13. Procédé selon la revendication 12, caractérisé en ce que, pour former un précurseur sous forme aciculaire, on fait réagir une solution de sel de fer (II), tel que FeCl₂, sur une solution d'acide oxalique, en faisant varier la concentration de la solution de FeCl₂ et le pH de la solution d'acide oxalique.

14. Procédé selon l'une des revendications 10 ou 11, caractérisé en ce qu'on contrôle la forme et la taille des particules du matériau obtenu en introduisant des germes initiateurs de croissance du précurseur au sein de la solution de fer.

15. Procédé selon la revendication 14, caractérisé en ce qu'on oriente la forme aciculaire et l'obtention de petites particules du matériau en utilisant conjointement de l'oxalate de fer et au moins un oxalate de terre rare, tel que l'oxalate de lanthane, utilisé par exemple en une quantité inférieure à 5% en atomes de lanthane par rapport aux atomes de fer.

16. Procédé selon l'une quelconque des revendications 10 à 15, caractérisé en ce qu'on opère le traitement thermique entre 300°C et 450°C environ.

17. Procédé selon l'une quelconque des revendications 10 à 16, caractérisé en ce que, pour le traitement de réduction et de nitruration simultanées, on utilise un mélange $H_2/NH_3$.

18. Procédé selon la revendication 17, caractérisé en ce qu'on favorise l'obtention d'un matériau de structure désirée en faisant varier les proportions du mélange $H_2/NH_3$, une augmentation de la proportion de $H_2$, par exemple des rapports $H_2/NH_3$ de 4/1 et au-delà, dans un four conventionnel, favorisant la formation de carbonitrure de fer selon la revendication 4, tandis que la diminution de la proportion de $H_2$ favorise la formation de carbonitrure de fer selon la revendication 2.

19. Procédé selon l'une quelconque des revendications 10 à 18, caractérisé en ce qu'on oriente sélectivement la formation d'un matériau magnétique à base de carbonitrure à structure dérivée de $Fe_4N$ en introduisant un dopant initiateur structural, tel qu'un sel de cuivre, dans la solution donnant naissance au précurseur de fer.

20. Procédé selon l'une quelconque des revendications 10 à 18, caractérisé en ce qu'on oriente sélectivement la formation d'un matériau magnétique à base de carbonitrure à structure dérivée, de $Fe_3N$ en introduisant un dopant initiateur structural tel qu'un sel de cobalt, dans la solution donnant naissance au précurseur de fer.

21. Procédé selon l'une quelconque des revendications 10 à 20, caractérisé en ce qu'on contrôle la croissance des microcristallites en introduisant un agent limitateur de croissance, tel que l'étain, capable de se substituer au fer dans le réseau cristallin du matériau final, à raison de 5 à 15%, en particulier de 10% environ, en atomes par rapport aux atomes de fer.

22. Procédé selon l'une quelconque des revendications 10 à 21, caractérisé en ce qu'on introduit dans le précurseur des éléments présentant une anisotropie magnétocristalline importante, tels que l'iridium ou le rhodium, en particulier jusqu'à 20% en atomes desdits éléments par rapport au nombre total d'atomes métalliques.

23. Matériaux ferromagnétiques obtenus par le procédé selon l'une des revendications 10 à 22, comprenant le nitrure de fer $Fe_4N$, lequel contient des atomes de carbone dans son réseau cristallin.

24. Matériaux ferromagnétiques selon la revendication 23 comprenant le produit obtenu par décomposition d'oxalate de fer en atmosphère simultanément réductrice et carburante.

25. Eléments d'enregistrement magnétique comprenant essentiellement un support en matière non magnétique comportant un matériau ferromagnétique selon l'une quelconque des revendications 1 à 9, 23 et 24.

**Patentansprüche**

1. in zerteilter Form vorliegender, aus einem Eisencarbonitrid bestehender ferromagnetischer Werkstoff, dadurch gekennzeichnet, daß seine Koerzitivkraft zwischen 30 und 80 kA/m liegt.

2. Ferromagnetischer Werkstoff nach Anspruch 1, dessen Kristallstrukture derjenigen von Eisennitrid $Fe_4N$ entspricht, in der etwa 1 bis 35% der Stickstoffatome durch Kohlenstoffatome ersetzt sind.

3. Ferromagnetischer Werkstoff nach Anspruch 1, dessen Kristallstruktur derjenigen des Eisennitrids $Fe_3N$ entspricht, in der etwa 1 bis 35% der Stickstoffatome durch Kohlenstoffatome ersetzt sind.

4. Ferromagnetischer Werkstoff nach Anspruch 1, dessen Struktur derjenigen einer festen Lösung von α-Nitroferrit entspricht, in der etwa 1 bis 50% der Stickstoffatome der festen Lösung durch Kohlenstoffatome ersetzt sind.

5. Werkstoff nach irgendeinem der Ansprüche 1 bis 4, in dem die verbleibenden Eisenatome des Kristallgitters durch 5 bis 15%, insbesondere etwa 10% Zinnatome substituiert sind.

6. Werkstoff nach irgendeinem der Ansprüche 1 bis 5, der, bezogen auf die Gesamtzahl der Metallatome des Werkstoffs, bis zu 20% an Elementen mit starker magnetokristalliner Anisotropie, z.B. Iridium oder Rhodium, mit dem Oxidationsgrad O aufweist.

7. Werkstoff nach irgendeinem der Ansprüche 1 bis 6, der außerdem Seltenerdatome, z.B. Lanthan, in einer Menge von maximal 5%, bezogen auf die Gesamtzahl der Metallatome, enthält.

8. Werkstoff nach Anspruch 2, der außerdem ein strukturelles Initiatorelement, das in einem kubischflächenzentrierten System kristallisiert, z.B. Kupfer, enthält.

9. Werkstoff nach Anspruch 3, dadurch gekennzeichnet, daß er außerdem ein strukturelles Initiatorelement, das in einem hexagonalen System kristallisiert, z.B. Kobalt, enthält.

10. Verfahren zur Herstellung eines aus einem Eisencarbonitrid bestehenden ferromagnetischen Werkstoffs, dadurch gekennzeichnet, daß es eine einstufige Reduktions- und Nitrierbehandlung wenigstens einer, aus einem Eisenverbindung bestehenden Vorläufer umfaßt, der sich unter den Bedingungen dieser Behandlung unter Bildung einer aufkohlenden Atmosphäre zersetzt und so zu einem Eisennitrid führt, das in seinem Kristallgitter Kohlenstoffatome enthält.

11. Verfahren nach Anspruch 10, dadurch gekennzeichnet, daß man den vorläufer unter den Eisenverbindungen, die bei ihrer thermischen Zersetzung Kohlenoxide bilden, insbesondere den Eisenoxalaten, -acetaten, -citraten, -benzoaten und -acetylacetonaten wählt, wobei die Oxalate, Acetate und Citrate bevorzugt werden.

12. Verfahren nach einem der Ansprüche 10 oder 11, dadurch gekennzeichnet, daß man die Form

# 0 102 881

und/oder die Größe der Teilchen des erhaltenen Werkstoffs durch die Wahl der Art des Vorläufer dank der Tatsache variiert, daß der Übergang des Vorläufer zum Eisencarbonitrid unter Pseudomorphose erfolgt.

13. Verfahren nach Anspruch 12, dadurch gekennzeichnet, daß man zur Bildung eines Vorläufer in Nadelform eine Lösung eines Eisen(II)-salzes, z.B. $FeCl_2$ mit einer Oxalsäurelösung umsetzt, wobei man die Konzentration der $FeCl_2$-Lösung und den pH-Wert der Oxalsäurelösung verändert.

14. Verfahren nach einem der Ansprüche 10 oder 11, dadurch gekennzeichnet, daß man die Form und die Größe der Teilchen des erhaltenen Werkstoffs einstellt, indem man Wachstumsinitiatorkeime des Vorläufer in die Eisenlösung einführt.

15. Verfahren nach Anspruch 14, dadurch gekennzeichnet, daß man die Nadelform und die Gewinnung kleiner Teilchen des Werkstoffs einstellt, indem man gleichzeitig Eisenoxalat und wenigstens ein Seltenerdoxalat, z.B. Lanthanoxalat, verwendet, das beispielsweise in einer Menge unter 5%, gerechnet als Lanthanatome und bezogen auf die Eisenatome, verwendet wird.

16. Verfahren nach irgendeinem der Ansprüche 10 bis 15, dadurch gekennzeichnet, daß man die Wärmebehandlung zwischen etwa 300°C und 450°C durchführt.

17. Verfahren nach irgendeinem der Ansprüche 10 bis 16, dadurch gekennzeichnet, daß man für die Behandlung der gleichzeitigen Reduktion und Nitrierung ein $H_2/NH_3$-Gemisch verwendet.

18. Verfahren nach Anspruch 17, dadurch gekennzeichnet, daß man die Gewinnung eines Werkstoffs mit gewünschter Struktur begünstigt, indem man die Mengenanteile des $H_2/NH_3$-Gemisches verändert, wobei eine Erhöhung des $H_2$-Anteils, beispielsweise der $H_2/NH_3$-Verhältnisse von 4/1 und darüber in einem üblichen Ofen die Bildung von Eisencarbonitrid gemäß Anspruch 4 begünstigt, während die Verringerung des $H_2$-Anteils die Bildung von Eisencarbonitrid gemäß Anspruch 2 begünstigt.

19. Verfahren nach irgendeinem der Ansprüche 10 bis 18, dadurch gekennzeichnet, daß man die Bildung eines magnetischen Werkstoffs auf Basis von Carbonitrid mit einer von $Fe_4N$ abgeleiteten Struktur selektiv einstellt, indem man einen als Strukturinitiator wirksamen Dotierstoff, z.B. ein Kupfersalz, in die Lösung einführt, in der der Eisenvorläufer entsteht.

20. Verfahren nach irgendeinem der Ansprüche 10 bis 18, dadurch gekennzeichnet, daß man die Bildung eines magnetischen Werkstoffs auf Basis von Carbonitrid mit einer von $Fe_3N$ abgeleiteten Struktur selektiv einstellt, indem man einen als Strukturinitiator wirksamen Dotierstoff, z.B. ein Kobaltsalz, in die Lösung einführt, in der der Eisenvoläufer entsteht.

21. Verfahren nach irgendeinem der Ansprüche 10 bis 20, dadurch gekennzeichnet, daß man das Wachstum der Mikrokristallite einstellt, indem man ein wachstumbegrenzendes Mittel, z.B. Zinn, das in der Lage ist, sich zum Eisen im Kristallgitter des endgültigen Werkstoffs zu substituieren, in einer Menge von 5 bis 15%, insbesondere von etwa 10%, gerechnet als Atome und bezogen auf die Eisenatome, einführt.

22. Verfahren nach irgendeinem der Ansprüche 10 bis 21, dadurch gekennzeichnet, daß man Elemente mit starker magnetokristalliner Anisotropie, z.B. Iridium oder Rhodium, in den Vorläufer, insbesondere bis zu 20% an Atomen der genannten Elemente, bezogen auf die Gesamtzahl der Metallatome, einführt.

23. Nach dem Verfahren gemäß einem der Ansprüche 10 bis 22 erhaltener, Eisennitrid $Fe_4N$ enthaltender Werkstoff, der Kohlenstoffatome in seinem Kristallgitter enthält.

24. Ferromagnetischer Werkstoff nach Anspruch 23, enthaltend das Produkt, das durch Zersetzung von Eisenoxalat in gleichzeitig reduzierender und aufkohlender Atmosphäre erhalten worden ist.

25. Magnetische Aufzeichnungsmaterialien, umfassend im wesentlichen einen Träger aus nichtmagnetischem Werkstoff, der einen ferromagnetischen Werkstoff nach irgendeinem der Ansprüche 1 bis 9, 23 und 24 trägt.

## Claims

1. Ferromagnetic material consisting of an iron carbonitride presented in divided form, characterized in that its coercive field is between 30 and 80 kA/m.

2. Ferromagnetic material according to Claim 1, whose crystal structure corresponds to that of iron nitride $Fe_4N$ in which 1 to 35%, approximately, of the nitrogen atoms are replaced by carbon atoms.

3. Ferromagnetic material according to Claim 1, whose crystal structure corresponds to that of iron nitride $Fe_3N$ in which 1 to 35%, approximately, of the nitrogen atoms are replaced by carbon atoms.

4. Ferromagnetic material according to Claim 1, whose structure corresponds to that of a solid solution of alpha nitroferrite in which 1 to 50%, approximately, of the nitrogen atoms in the solid solution are replaced by carbon atoms.

5. Material according to any one of Claims 1 to 4, in which the remaining iron atoms in the crystal lattice are substituted by 5 to 15% of tin atoms, in particular approximately 10%.

6. Material according to any one of Claims 1 to 5, containing up to 20% on an atomic basis, based on the total number of metal atoms in the material, of elements having a high magnetocrystalline anisotropy, such as iridium or rhodium with a degree of oxidation of 0.

7. Material according to any one of Claims 1 to 6, additionally containing rare-earth atoms such as lanthanum in a proportion of at most 5% based on the total of the metal atoms.

8. Material according to Claim 2, additionally containing a structural initiator element crystallizing in a face-centred cubic system, such as copper.

9. Material according to Claim 3, characterized in that it additionally contains a structural initiator element crystallizing in a hexagonal system, such as cobalt.

10. Process for the preparation of a ferromagnetic material consisting of an iron carbonitride, characterized in that it comprises a single-stage reduction and nitriding treatment of at least one precursor consisting of an iron compound which decomposes under the conditions of the said treatment to form a carbiding atmosphere, thus producing an iron nitride containing carbon atoms in its crystal lattice.

11. Process according to Claim 10, characterized in that the precursors are chosen from iron compounds forming carbon oxides during their thermal decomposition, in particular iron oxalates, acetates, citrates, benzoates and acetylacetonates, those preferred being oxalates, acetates and citrates.

12. Process according to either of Claims 10 and 11, characterized in that the shape and/or the size of the particles of the material obtained is varied by means of the choice of the nature of the precursor, by virtue of the fact that the conversion of the precursor into iron carbonitride takes place with pseudomorphism.

13. Process according to Claim 12, characterized in that, in order to form a precursor in acicular form, a solution of an iron (II) salt, such as $FeCl_2$ is reacted with a solution of oxalic acid, the concentration of the $FeCl_2$ solution and the pH of the oxalic acid solution being varied.

14. Process according to either of Claims 10 and 11, characterized in that the shape and the size of the particles of the material obtained are controlled by introducing nuclei initiating the growth of the precursor within the iron solution.

15. Process according to Claim 14, characterized in that the acicular form and the production of small particles of the material are directed by jointly using iron oxalate and at least one rare-earth oxalate such as lanthanum oxalate, used, for example, in a quantity of less than 5% on an atomic basis of lanthanum, based on the iron atoms.

16. Process according to any one of Claims 10 to 15, characterized in that the heat treatment is carried out between 300°C and 450°C, approximately.

17. Process according to any one of Claims 10 to 16, characterized in that a $H_2/NH_3$ mixture is used for the simultaneous reduction and nitriding treatment.

18. Process according to Claim 17, characterized in that the production of a material of desired structure is promoted by varying the proportions of the $H_2/NH_3$ mixture, with an increase in the proportion of $H_2$, for example in the ratios of $H_2/NH_3$ of 4/1 and above, in a conventional furnace, promoting the formation of iron carbonitride, according to Claim 4, while the decrease in the proportion of $H_2$ promotes the formation of iron carbonitride according to Claim 2.

19. Process according to any one of Claims 10 to 18, characterized in that the formation of a magnetic material based on carbonitride with a structure derived from $Fe_4N$ is selectively directed by introducing a structural initiating dopant, such as a copper salt, into the solution which gives rise to the iron precursor.

20. Process according to any one of Claims 10 to 18, characterized in that the formation of a magnetic material based on a carbonitride of a structure derived from $Fe_3N$ is selectively directed by introducing a structural initiating dopant such as a cobalt salt into the solution which gives rise to the iron precursor.

21. Process according to any one of Claims 10 to 20, characterized in that the growth of the microcrystallites is controlled by introducing a growth-limiting agent, such as tin, capable of replacing iron in the crystal lattice of the final material, in a proportion of 5 to 15%, in particular of 10% approximately, on an atomic basis, based on the iron atoms.

22. Process according to any one of Claims 10 to 21, characterized in that elements which have high magnetocrystalline anisotropy, such as iridium or rhodium, are introduced into the precursor, especially up to 20%, on an atomic basis, of the said elements, based on the total number of metal atoms.

23. Ferromagnetic materials produced by the process according to one of Claims 10 to 22, comprising iron nitride $Fe_4N$ which contains carbon atoms in its crystal lattice.

24. Ferromagnetic materials according to Claim 23, comprising the product obtained by the decomposition of iron oxalate in a simultaneously reducing and carbiding atmosphere.

25. Magnetic recording components essentially comprising a substrate of nonmagnetic material containing a ferromagnetic material according to any one of Claims 1 to 9, 23 and 24.